Europäisches Patentamt

European Patent Office

Office européen des brevets

(19)

(11) Publication number: **0 085 118**

A1

(12) # EUROPEAN PATENT APPLICATION

(21) Application number: 82100602.0

(22) Date of filing: 28.01.82

(51) Int. Cl.³: **F 24 J 3/00**
**F 24 D 11/00**

(43) Date of publication of application:
10.08.83 Bulletin 83/32

(84) Designated Contracting States:
AT BE CH DE FR GB IT LI LU NL SE

(71) Applicant: Langford, Cooper
402-1355 Bank Street
Ottawa Ontario K1H 8K7(CA)

(71) Applicant: Jones, John
16 St. Andrews Circle
Hazeldean Ontario K2L 1L3(CA)

(71) Applicant: Riddell, William
18 Butterwick
Munster Hamlet Ontario KOA 3PO(CA)

(72) Inventor: Langford, Cooper
402-1355 Bank Street
Ottawa Ontario K1H 8K7(CA)

(72) Inventor: Jones, John
16 St. Andrews Circle
Hazeldean Ontario K2L 1L3(CA)

(72) Inventor: Riddell, William
18 Butterwick
Munster Hamlet Ontario KOA 3PO(CA)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) A dessicant heat storage system.

(57) The dessicant heat storage system includes (a) a source of air (11,45,14, or 114,111); (b) a fan means (16 or 116) for circulating the air, preferably at a rate of about 8.5 to about 28 cubic meters per minute, in a circulation system including an outgoing loop (18 or 118) and a return loop (30 or 130) for circulating air; (c) a primary heat distribution system (37 or 137); and (d) selectively operable air control means (33 or 133) disposed in the return loop of the circulating air, for selectively: circulating the air through the primary heat distribution system (37 or 137), e.g., a forced air furnace (37 or 137), preferably in combination with a retrofit system, or a hot air/hot water heat exchanger, or a high velocity air duct; or recirculating the air mixer means (33 or 133) selectively actuatable for: recirculating air (11 or 111) through the dessicant heat storage system (28 or 128), and/or passing air to the primary heat distribution system (37 or 137). According to this invention, the dessicant heat storage system also includes (i) selectively operable evaporator heat exchanger means (21 or 121) disposed in the outgoing loop of the circulating air, e.g., the evaporator stage (20) of a heat exchanger (21), where the air is passed in heat exchange relationship with warm moist air, thereby to heat the air while cooling the warm moist air, or a heat pump (21), where the air is passed in heat exchange relation through the evaporator stage (120) of a heat pump (121), thereby to heat the air while cooling the warm moist air; (ii) selectively operable air wetting means (22 or 122) disposed in the outgoing loop (18 or 118) of the circulating air, e.g., a humidifier (23 or 123), namely either a drum-type humidifier or a spray-type humidifier; (iii) selectively operable air heating means (24 or 124) disposed in the outgoing loop (18 or 118) of the circulating air; (iv) selectively operable condenser heat exchanger means (21 or 121) disposed in the return loop (30) of the circulating air, e.g., the condenser stage (31) of a heat exchanger (21), where moist warm air is passed in heat exchange relation with cool air, thereby condensing out excess moisture from the air and simultaneously recovering heat of evaporation from the air by transferring heat to the cool air, or the condenser stage (131) of a heat pump (121), where moist warm air is passed therethrough in heat exchange relation with cool air, thereby condensing out excess moisture from the air and simul-

./...

taneously recovering heat of evaporation from the air by transferring heat to the cool air; and (v) a dessicant-containing enclosure (28 or 128) disposed in the circulation system, the enclosure having air inlet means (27 or 127) thereinto from the outgoing loop (18 or 118 of the circulating air, and an a outlet means (29 or 129) therefrom to the return loop (30, 130) of the circulating air.

FIG. I

– 1 –

(a) Title of the Invention

A Dessicant Heat Storage System

(b) Technical Field to Which the Invention Relates

This invention relates to a method of, and system for, storing heat; especially a system including (a) source of air; (b) a fan means for circulating such air, preferably at a rate of about 8.5 to about 28 cubic meters per minute, in a circulation system including an outgoing loop and a return loop for circulating air; (c) a primary heat distribution system; and (d) selectively operable air control means disposed in the return loop of the circulating air, for selectively: circulating such air through the primary heat distribution system, e.g., a forced air furnace, preferably in combination with a retrofit system, or a hot air/hot water heat exchanger, or a high velocity air duct; or recirculating the air through the circulating system, e.g., air mixer means selectively actuatable for: recirculating air through the dessicant heat storage system, and/or passing air to the primary heat distribution system. Primarily, it is directed to the storage of heat produced by off-peak electrical power. It is adaptable, however, to store heat produced by other means.

(c) Relevant Background Art and Assessment Thereof

Various methods and systems have been proposed for the storage of heat and consequently heat storage of itself is not new. It has been suggested that gravel, rocks, concrete, soapstone, and even blocks of steel and the like be heated to a high temperature and that the heat content of the material be thereafter used while the temperature of the heat absorbing means goes down. Such devices of the prior art, however, are limited in their applicability by the fact that the only heat stored is sensible heat, which is a function of the specific heat of the material used. Since the specific heat of available materials is low, usually in the neighbourhood of 0.2 gram calories per gram, the heat storage capacity of such material between, for example, about $90^{\circ}C$ to about $260^{\circ}C.$, is only 60 gram calories per gram. This renders such heat storing means impractical for space heating purposes because of the large bulk necessary to provide storage for large amounts of heat and because of the need to minimize heat loss from the heat storage means by insulation.

More practical heat storage systems have been devised in which heat of solution or heat of fusion, or a combination of both, are utilized. In such system, a crystalline material having a large amount of water of crystallization may be used, the material being so applied and selected that, upon being heated, the solid material melts or dissolves in its own water of crystallization, with the resulting storage of relatively large quantities of heat in the form of latent heat of fusion and solution. The heat so stored can be recovered by permitting the material to recrystallize.

United States Patent No. 2,450,983 issued October 12, 1948 to C.M. Osterheld provided an off-peak heat storage system using electric heaters which resided in the use of an automatic thermostatic control system to energize the electric heater in conjunction with an additional input as to whether it was night or day. An electric heater was provided for heating a heat storage mass. A light-sensitive cell was provided which was subject to daylight and to darkness. A plurality of thermostats were provided in a close heat-receiving relation to the heat storage mass and were adapted to move to closed position at different temperature values of the heat storage. A plurality of time delay relays were provided which were electrically connected in series electric circuit with certain of the thermostats, each relay being a normally open thermally-actuable member and a heating coil therefor. A switch which was controlled by the light-sensitive cell was provided for energizing the heating cells of time-delay relays after fall of darkness to cause closure of the thermally-actuable member after a predetermined period of time, and energization of such heater.

United States Patent No. 2,677,243 issued May 4, 1954 to M. Telkes purported to provide an apparatus for storing heat, utilizing the principle of the heat of fusion, and a process for releasing the heat thus stored. According to that patentee, a limited portion of the

- 3 -

0085118

heat storage composition was either maintained at, or was occasionally subjected to, a temperature substantially lower than the melting point of the composition, and specifically below the temperature of metastable supersaturation of the composition. By this means seeding nuclei were maintained or formed in a limited portion of the mass of heat storage material, and when the same had been undercooled below its melting point in an effort to extract heat therefrom, crystal formation based upon such nuclei spread rapidly throughout the mass, thus allegedly releasing large quantities of latent heat.

United States Patent No. 2,856,506 issued October 14, 1958 to M. Telkes purported to provide a method of storing and releasing heat utilizing a heat storage material and method of heating a substance which included transferring stored heat thereto from such a material. The patentee provided a system, including apparatus and method, for storing heat at a relatively high temperature by utilizing as the heat storage medium, a crystalline solid which is dimorphic, that is to say, which changes from one crystalline form to another on the application of heat, which has a transition temperature between about $150^{\circ}$C. and about $290^{\circ}$C., and which has a relatively high heat of transition. The material suggested was anhydrous sodium sulfate, either by itself or modified by the addition of other salts, which could be converted by heating from the rhombic crystal form to a hexagonal form.

United States Patent No. 3,382,917 issued May 14, 1968 to R.E. Rice provided a heat storing system including a unit in which heat may be stored at widely-varying temperatures, a heat exchanger, a chamber for heating fluid or other heater, a conduit leading from the storage unit to the exchanger through which fluid may be circulated to transfer heat from the unit to the exchanger, a second conduit leading from the exchanger to the heater for transferring heat from the exchanger to the heat, regulating means in the first conduit for varying the rate of heat transfer from the unit to the exchanger, and thermostatic means in the second conduit for controlling the regulating means. The regulating means suggested was a circulator and flow modifier. The fluid may be either gas or liquid, the circulator may comprise a blower, pump or fan, and the flow modifier may comprise a by-pass or throttle.

United States Patent No. 3,989,927 issued November 2, 1976 to G.O. Erb provided a storage heater for heating a gaseous heat extraction

- 4 -

0085118

medium which is formed of a container of heat resistant material, preferably metal. At least one guide duct, in the form of a tube for carrying the gaseous heat extraction medium, extended through the container which held a heat storage medium in the form of a pourable bulk of particulate solid material. The thermal storage medium comprised a bulk in which the product of specific heat of the solid material and the bulk density of the mass was a specified amount.

Rice Canadian Patent No. 755,977 provides a system which involves directly heating a material in the storage bed to store sensible heat therein. The dessicant material is in a chamber separate and distinct from the heat storage material. The patentee comprehends a device intended to protect the heat store from moisture and $CO_2$. Rice emphasizes insulation which demonstrates storage as reversible and/or latent heat.

Johnson Canadian Patent No. 170,332 provides system which uses sensible heat from an electric heat to dissociate a chemical compound, to store the dissociated compounds, and then to react them, whereby the exothermic heat of reaction provides sensible heat. The Johnson invention uses a "phase change" between $CuSO_4.H_2O$ and $CUSO_4$ + $H_2O$ contained in a single unit. Such unit must be insulated since it can absorb moisture as the temperature falls.

Another prior art system for the utilization of solar energy for cooling is described in an article by D.I. Tchernev entitled "Solar Energy Application of Natural Zeolites" [U.S. N.T.I.S. pp Rep. 1977 pp 266055, GRI 1977 77(14) 156]. The author describes a system using natural chabozite on clinoptilolite as the solid absorber and water vapour as the working fluid in a zeolite system to provide domestic hot water and space heating. One such system combines a condenser and an evaporator into a single unit that is cooled by an external water loop. During the day, water vapour desorbed from the solar-heated zeolite is condensed in this unit and the liquid water is stored in the condenser in a condensate storage tank until evening. The heat of condensation may be used for providing domestic hot water and for space heating. Whenever there is a demand for heat, hot water can be circulated through a coil located in air ducts of a forced air system, and the heated air is distributed throughout the building.

The background art is still deficient in providing a solution to the many problems of a dessicated heat storage system, since it does not provide: a system having a high heat storage capacity; a system in which there is substantially no heat loss from the system when heating is not required; a system which does not require added exchangers in direct connection to the heat storage unit; a system which requires a fairly low charging temperature; a system which provides for the disposal of the hot moist air produced during the drying out or charging cycle; and a system providing the moist air during the wetting or heating cycle.

(d) Disclosure of the Invention

The present invention provides an improvement over the prior art systems and provides a system having a high heat storage capacity; a system in which there is substantially no heat loss from the system when heating is not required; a system which does not require added exchangers in direct connection to the heat storage unit; a system which requires a fairly low charging temperature; a system which provides for the disposal of the hot moist air produced during the drying out or charging cycle; and a system providing moist air during the wetting or heating cycle. Such system is based on gas adsorption for chemical potential storage of energy (CES). Such gas adsorption concept provides the means for constructing a "CES" system or "heat battery". The present invention uses a dessicant, e.g., zeolite, and a means of drying out or charging the system by the use, e.g., of off-peak electric power. The heat is then released as required during periods of peak electric power by the re-introduction of moisture, in effect releasing the stored heat of vaporization.

The present invention is thus characterized in that it comprises (i) selectively operable evaporator heat exchanger means disposed in the outgoing loop of such circulating air, e.g., the evaporator stage of a heat exchanger, where the air is passed in heat exchange relationship with warm moist air, thereby to heat the air while cooling the warm moist air, or a heat pump, where the air is passed in heat exchange relation through the evaporator stage of a heat pump, thereby to heat the air while cooling the warm moist air; (ii) selectively operable air wetting means disposed in the outgoing loop of the circulating air, e.g., a humidifier, namely either a drum-type humidifier or a spray-type humidifier; (iii) selectively operable air heating means disposed in the outgoing loop of the circulating air, e.g., an electric resistance heater, preferably of 10-30 KW, or a heat pump, or a solar collector, or a solar/electric heater; (iv) selectively operable condenser heat exchanger means disposed in the return loop of the circulating air, e.g., the condenser stage of a heat exchanger, where moist warm air is passed in heat exchange relation with cool air, thereby condensing out excess moisture from the air and simultaneously recovering heat of evaporation from the air by transferring heat to the cool air, or the condenser stage of a heat pump, where moist warm air is passed therethrough in heat exchange relation with cool air, thereby condensing out excess moisture from the air and simultaneously recovering heat of evaporation from the air by transferring heat to the cool air; and (v) a dessicant-containing enclosure disposed in the circulation system, the enclosure having air inlet means thereinto from the outgoing loop of the circulating air, and an air outlet means therefrom to the return loop of the circulating air.

In one embodiment, the dessicant-containing enclosure comprises: a box; a plurality of hollow tubes, e.g., perforated hollow tubes containing dessicant, e.g., a Zeolite, therein, the tubes being disposed between an inlet plenum and an outflow plenum; air flow connections between the hollow tubes and the plenums, e.g., by means of hollow collars disposed within the core of the hollow tubes; means for feeding air to the inlet header; and means for withdrawing air from the outlet header.

In another embodiment, the dessicant bed is constructed and configured to absorb about 5 - 20% of its own weight of water by the passage of moist air therethrough.

In further embodiments, the system includes means associated with the condenser stage for recovering the moisture removed from the moist air and especially where it includes further means for using recovered moisture in the air wetting means.

In yet a further embodiment, the system includes thermostat and associated control means for shutting off the air wetting means just prior to the sensing of the value of the temperature reaching a predetermined value.

The present invention also provides a method of dessicant heat storage comprising: (A) storing heat by the steps comprising (a) drawing outside air and/or inside air into an internal air circulation system, (b) heating the outside air and/or passing heated inside air at a temperature of about 120-200°C. through a dessicant bed, thereby drying the dessicant bed, while storing heat in the dessicant bed and transferring moisture to the air, (c) withdrawing warm moist air at a temperature of up to about 200°C. from the dessicant bed, (d) passing the warm moist air through a condensation zone, whereby its moisture content is reduced, and (e) circulating the drier air within the internal air circulation system; and (B) recovering the stored heat by the steps comprising: (f) drawing internal air into the air circulation system, (g) converting the air to moist air, (h) passing the moist air through the dried dessicant bed, thereby wetting the bed to a moisture content of about 5-20% by weight while releasing heat from the bed, to the air, and drying the air, and (i) circulating the warm dry air within the internal circulation system.

(e) Advantageous Effects of the Invention

The present invention provides a significant advantage over the background prior art in that the heat storage vessel does not need to be insulated even though it contains stored heat. Other advantages over a conventional system are:

1. High heat storage capacity, in the neighbourhood of 250 gram calories per gram of material.

2. Since only approximately 20% of the heat stored is sensible heat produced during the charging cycle, there is no heat loss from the system when heting is not required. The importance of this advantage is significant particularly during the time of the year when maximum heating is not required. For example, a conventional system would release some heat even during a day when it was not required. This could result in overheating the space which is an energy loss. The present system stores heat indefinitely and will only release heat when it is required and moisture is added to the bed.

3. The dessicant is non-corrosive and allows the heating air to pass through it without the need for heat exchangers and resultant inefficiencies.

4. Relatively low charging temperatures (about 60°C.) compared to systems for the storage of sensible heat. The relatively small quantity of sensible heat produced during the charging cycle would be used for heating the residence during and immediately after the charging period.

(f) <u>Description of at Least One Way of Carrying Out the Invention</u>
<u>with Reference to the Drawings</u>

Ways of carrying out the invention are described in detail below with reference to the drawings which illustrate specific embodiments, in which:

Figure 1 is a schematic drawing of a dessicant heat storage system of one embodiment of this invention using ventilating air to utilize latent heat;

Figure 2 is a schematic drawing of a dessicant heat storage system of another embodiment of this invention using a heat pump to utilize latent heat;

Figure 3 is an isometric view, partially broken away, of an energy storage container used in a system of one embodiment of this invention;

and      Figure 4 is a vertical section, in disassembled form, of the energy storage container of Figure 3.

(g) <u>Description of Ways of Carrying Out the Invention</u>

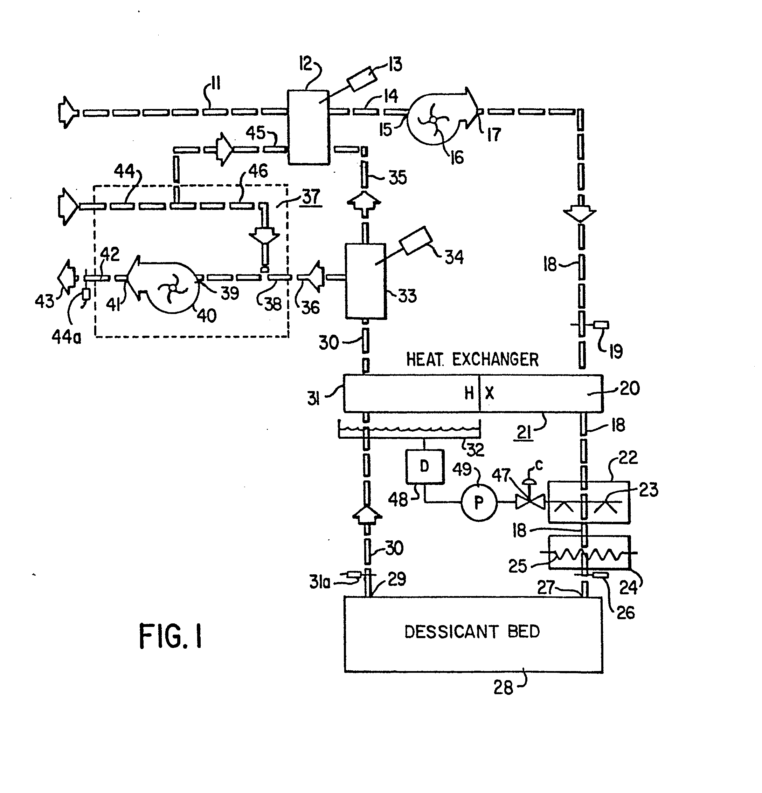

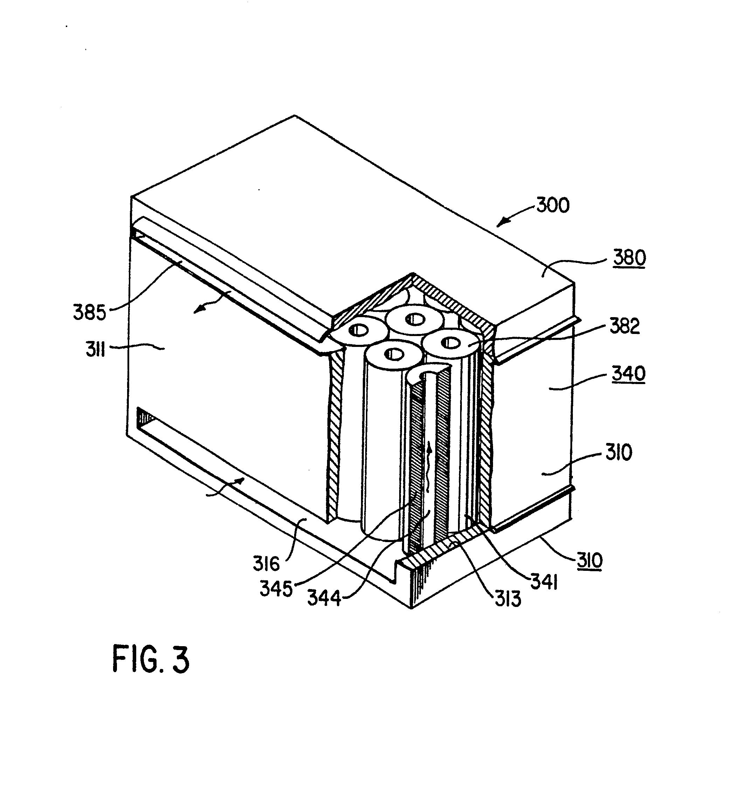

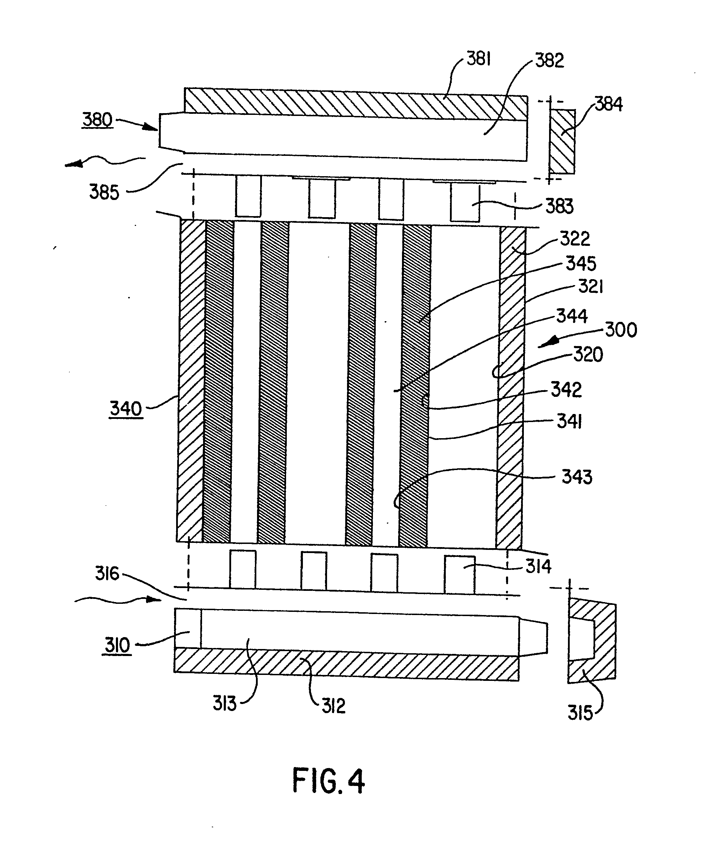

In one embodiment of a dessicant heat storage system, as seen in Figure 1, a line 11 leads a source of air, namely, outside air, through a mixing box 12 having controlled vanes to permit preselected air flows and including a heat sensor 13 operatively connected thereto. Another line 14 leads to the intake side 15 of fan 16 whose exhaust 17 is connected to line 18 constituting an outgoing loop. Fan 16 is a positive displacement fan having a rating of about 8.5 - 28 cubic meters per minute. Line 18 is provided with heat sensor 19 and passes through the evaporation side 20 of heat exchanger 21. Line 18 then passes through rewetting box 22 provided with means 23 to rewet air. These means may be a conventional commercial drum-type or spray-type humidifier. Line 18 then passes through a heater box 24 provided with a means 25 to heat air. These means 25 are preferably a resistance heater rated about 10-30 kilowatts. A third heat sensor 26 is provided in line 18 just before line 18 enters the intake 27 of the dessicant bed 28. A structure and configuration of one embodiment of dessicant bed will be described in greater detail hereinafter with reference to Figures 3 and 4.

The outlet 29 of the dessicant bed 28 leads to line 30, constituting a return loop, and is provided, near outlet 29, with a fourth heat sensor 31. Line 30 leads to the condensation side 31 of heat exchanger 21. Any moisture in the air which condenses out is collected in tray 32, to be reused as will be described hereinafter. Then, line 30 leads to a mixing box 33 provided with controlled plates to permit selected air flow. Mixing box 33 is provided with a fifth heat sensor 34.

Two lines branch off from mixing box 32. One line, 35, leads to mixing box 12 where vanes therein can recirculate the air through the system via fan 17 and line 18., A second line, 36, is controlled by vanes to lead to furnace 37. Furnace 37 is provided with a flow line 38 connecting line 36 with the intake 39 of furnace fan 40. The furnace fan 40 may include a positive displacement fan rated at about 28 cubic meters per minute. The outlet 41 from the furnace fan 40 is discharged at 42 to the hot air discharge duct 43. A fifth heat sensor 44 may be placed in the discharge duct 43.

The furnace 37 is also provided with room air return line 44, which bifurcates to an outgoing line 45 which leads to mixing box 12, and with recycle line 46 leading back to line 38.

In the operation of this embodiment of this invention, for the charging or drying cycle, system circulation of a mix of outside air and room air by means of fan 16 drives air flowing at a rate of, e.g., about 85 - 28 cubic meters per minute through the evaporator side 20 of the heat exchanger 21, and then through the heating box 24 where the temperature is raised up to a maximum of about $200^{\circ}$C., preferably to about $150^{\circ}$C. This air at such temperature then passes through the dessicant bed 28 containing a suitable dessicant (e.g., a zeolite, e.g., those known by the trade marks Zeolite 13A, Zeosorb 3.5A, Zeosorb 5.0A, ort chabozite, clinoptolite, erionite or mordenite) drying the dessicant and emerging as warm moist air at a temperature of up to about $200^{\circ}$C. The warm moist air then passes through the condenser side 31 of heat exchanger 21 where moisture is removed and the water then stored in container 32. The air, now at a temperature of ambient up to about $100^{\circ}$C. to about $150^{\circ}$C., then is passed through mixing box 33. If the air is to be recycled, it then passes into mixing box 12 where it is mixed with outside air (via line 11) and with return air (via line 45) to lower its temperature. Such low temperature air is then recycled by being forced by fan 16 through the heat exchanger 21 to continue the cycle.

If the air is to be passed through the existing furnace 37, it passes from mixing box 33 to line 36 to the furnace 37.

It is to be observed that only maximum temperatures have been given. The temperature of the air depends on the humidity thereof at various stages within the cycle and also on the particular instantaneous stage of the cycle, i.e., whether it is near the beginning or the end of the cycle.

The principle involved in this embodiment of this invention is that the mix of outside air and return air provides a sufficient temperature difference across the heat exchanger to remove moisture from the hot discharge air from the dessicant bed. The second mixing box permits the furnace fan to draw heat from the system when heating is required. The system is designed to provide heat for the building during off-peak periods and to store the heat during other periods.

The state of charge of the dessicant in the dessicant bed 28 is determined by temperature sensors 26, 31, located at the intake and discharge sides, respectively, of the dessicant bed 28. This operates on the principle that, as the dessicant bed dries, the temperature of the discharged ari rises until it almost equals the temperature of the intake air.

In the discharge or heating cycle, on a call for heat, both the circulation fan 16 and furnace fan 40 start up. The vane within mixing box 12 is closed to shut off the supply of outside air from line 11 during the heating cycle. The air is circulated by fan 16 through the rewetting box 22 where its moisture is brought up to about 30%-90% and then through the dessicant bed 28 where the dessicant therein absorbs about 5-20% of its weight of water, thereby simultaneously drying the air and heating the air. The warm air at a temperature up to about $200^{\circ}$C. emerging from the dessicant bed 28 passes in non-heat exchange relationship through heat exchanger 21 and then is drawn off through mixing box 33 by furnace fan 40. The air is circulated through the building and is returned through lines 44 and 45 to mixing box 12 and to fan 16 to continue the cycle. The temperature of the air is controlled by the amount of moisture delivered to the air by a pump 46 and a control valve 47 leading from container 32. To prevent overheating and sensible heat loss from the dessicant bed 28, a thermostat and data processor 48 is provided to anticipate the heating requirement and to turn off the wetting system prior to the building reaching the desired temperature. At this time, even though the air is not being wetted, it is still passed through the dessicant bed 28. Now the air picks up the residual sensible heat remaining in the dessicant bed 28 for use in heating the building. The dessicant bed 28 therefore is warm only when heat is required, except during the period immediately after charging. During that period, sensible heat would be drawn from the dessicant bed 28 as reuqired until the dessicant bed 28 cooled.

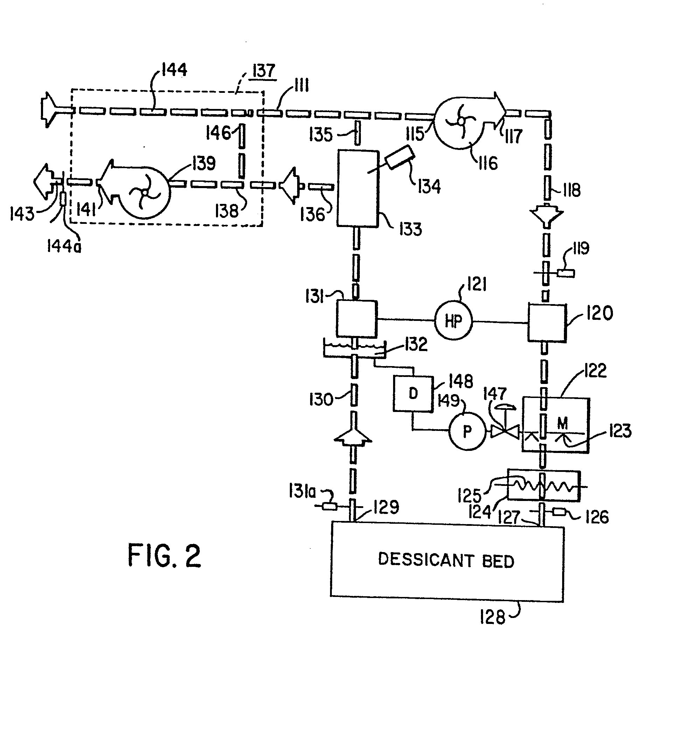

In a second embodiment of the invention shown in Figure 2, room air is connected via furnace intake line 144 to furnace 137 and then to the intake side 115 of fan 116. The exhaust side 117 of fan 116 leads via line 118 constituting an outgoing loop to the evaporator side 120 of a heat pump 121. The line 118 is provided with a heat sensor 119. Line 118 leads through a rewetting box 122 having a rewetter 123 as previously described for Fig. 1. Then line 118 leads through heater box 124 containing a heater 125 as described for Fig. 1. A heat sensor 126 is provided in line 118 before it enters inlet 127 of dessicant bed 128. The outlet 129 from dessicant bed 128 leads to outlet line 119 past heat sensor 131 also including a condensation tray 132. The outlet line 130 constituting a return loop from condenser side 131 passes through mixing box 133. Mixing box 133 is provided with a heat sensor 134. Two lines lead from mixing box 133, one to line 111 for recycling through the system and the second line 136 to furnace line 138 to the inlet side 139 of furnace fan 140. Furnace fan 140 expels heated air through exhaust side 141 to hot air outlet 143. Hot air outlet 143 is provided with a heat sensor 144.

In use of this system, the circulation is the same as that for the ventilating air system described with reference to Figure 1 with with the exception that there is no outside air required to cool a heat exchanger and to remove the moisture from the dessicant bed 128. This function is accomplished by the use of the heat pump 121 with its evaporator section 120 in the outgoing side and its condenser section 131 in the return side of the circuit. The heat for drying the dessicant bed in this embodiment of the invention is largely supplied by the heat pump 121 with the resistance heater 125 acting as a booster.

The discharge or heating cycle in this embodiment is identical to that described hereinbefore for Figure 1 since the heat pump 121 does not operate during this cycle. Consequently, no further description will be given at this time.

Figures 3 and 4 show a typical dessicant heat storage container 300. The container includes a bottom section 310, a core section 340 and a top section 380, all contained within a rectangular parallelepiped hollow box 311. The core section 340 is packed with a plurality of hollow cylinders 341, each comprising an outer shell 342 and an inner shell 343, defining a core 344, and preferably made from square mesh woven wire cloth having about 3 meshes per linear centimeter of stainless steel wire and having about 38.8% open area. The shell walls are reinforced at their mid-length and are then filled with the dessicant material 345, e.g., zeolite.

The bottom section 310 comprises a base 312 supporting a bottom intake plenum 313. The plenum 313 is provided with a plurality of inlet tubular collars, the number of such collars 314 being equal to the number of hollow cylinders 341. The collars 314 project into the core 344 of the hollow cylinders 341. The plenum 313 is sealed with a bottom cap 315. The plenum 313 is fed by an inlet throat 316.

Similarly, the top section 380 includes a roof 381 with a depending upper outflow plenum 382 therein. The plenum 382 is provided with a similar plurality of outlet tubular collars 383, the number of such tubular collars being equal to the number of the hollow cylinders. 341. The collars 383 are fed from the core 341 of the respective hollow cylinder 341. The upper plenum 382 is sealed with a cap 384. The upper outflow plenum 382 discharges through an outlet vent 385.

The hollow box 311 comprises an inner wall 320, and an outer wall 321, with fire-retardant high density insulation core 322 therebetween.

The collars, upper and lower plates, inlet and outlet caps, and upper roof and support plates are all preferably made from glass fiber reinforced plastic. The components are preferably assembled with non-corroding removable fasteners. All joints are preferably made airtight with high temperature gaskets.

Thus, as described above, one embodiment of this invention for utilizing latent heat during the drying cycle is to warm cold outside air which would normally infiltrate a building. Cool air is pulled into the dessicant circuit through a heat exchanger which cools the air leaving the dessicant bed and removes moisture from the moist air. This, in turn, warms the cool air, which then may be distributed through the system. The effect is to pressurize the building to the extent that, for every cubic meter of air introduced through the dessicantsys-system, an equal amount is prevented from entering through the building skin. The moisture removed by this method (possibly about 18 to 22 liters) is retained for use during the wetting cycle of the heating cycle. During the wetting cycle, a cold water method of humidification would be used as the vaporization of the liquid during peak periods would require power equal to that used during the charging cycle and negate the cost effectiveness of the system. A standard commercial drum or spray-type humidifier would be used for the heating cycle.

A second embodiment of this invention is a system identical to the first with a modification in the drying cycle to allow the use of a heat pump to remove the moisture from the warm moist air and to re-introduce the heat generated by condensation to the supply side of the dessicant bed.

Which embodiment to be used would depend upon climate, type of residence, local regulations and customer acceptance. For example, some jurisdictions require minimum ventilating air be supplied to the residence at all times. This would make the first embodiment suitable.

While the examples herein describe the invention as a retrofit to a forced air furnace, it may be used as a new system including a forced air system. Other primary heat distribution systems may also be used. For example, a hot water heating system including a hot air/ water heat exchange system may be used, either as a new system or as a retrofit system. Another type of primary heat distribution system is the so-called high velocity duct system.

The system used to take advantage of latent heat recovery may be a heat exchanger or a heat pump. As noted before, where an air "leakage" system is selected, a heat exchanger would be used. Any other equivalent type of evaporator/condenser heat transfer system could also be used.

The system is designed primarily to use the off-peak electric power to heat the air to dry the dessicant bed. However, a heat pump may be used. Also any convenient source of heat may be used, e.g., from engines, etc. Also, solar collectors or solar/electric heaters from engines, etc.  Also, solar collectors or solar/electric heaters may be used.

Claims:

1. A dessicant heat storage system including (a) a source of air (11,45,14 or 114,111); (b) a fan means (16 or 116) for circulating said air, preferably at a rate of about 8.5 to about 28 cubic meters per minute, in a circulation system including an outgoing loop (18 or 118) and a return loop (30 or 130) for circulating air; (c) a primary heat distribution system (37 or 137); and (d) selectively operable air control means (33 or 133) disposed in said return loop of said circulating air, for selectively: circulating said air through said primary heat distribution system (37 or 137), e.g., a forced air furnace (37 or 137), preferably in combination with a retrofit system, or a hot air/hot water heat exchanger, or a high velocity air duct; or recirculating said air through said circulating system (18 or 118), e.g., air mixer means (33 or 133) selectively actuatable for: recirculating air (11 or 111) through said dessicant heat storage system (28 or 128), and/or passing air to said primary heat distribution system (37 or 137); characterized in that it comprises

> (i) selectively operable evaporator heat exchanger means (21 or 121) disposed in said outgoing loop of said circulating air, e.g., the evaporator stage (20) of a heat exchanger (21), where said air is passed in heat exchange relationship with warm moist air, thereby to heat said air while cooling said warm moist air, or a heat pump (121), where said air is passed in heat exchange relation through the evaporator stage (120) of a heat pump (121), thereby to heat said air while cooling said warm moist air;

> (ii) selectively operable air wetting means (22 or 122) disposed in said outgoing loop (18 or 118) of said circulating air, e.g., a humidifier (23 or 123), namely either a drum-type humidifier or a spray-type humidifier;

> (iii) selectively operable air heating means (24 or 124) disposed in said outgoing loop (18 or 118) of said circulating air, e.g., an electric resistance heater, preferably of 10-30 KW, or a heat pump, or a solar collector, or a solar/electric heater;

> (iv) selectively operable condenser heat exchanger means (21 or 121) disposed in the return loop (30) of said circulating air, e.g., the condenser stage (31) of a heat exchanger (21), where moist warm air is passed in heat exchange relation with cool air, thereby condensing out excess moisture from said air and simultaneously recovering heat of evaporation from said air by transferring heat to said cool air, or the condenser stage (131) of a heat pump (121), where moist warm air is passed therethrough in heat exchange relation with cool air, thereby condensing out excess moisture from said air and simultaneously recovering heat of evaporation from said air by transferring heat to said cool air;

and    (v) a dessicant-containing enclosure (28 or 128) disposed in said circulation system, said enclosure having air inlet means (27 or 127) thereinto from said outgoing loop (18 or 118) of said circulating air, and an air outlet means (29 or 129) therefrom to said return loop (30, 130) of said circulating air.

2. The dessicant heat storage system of claim 1 <u>further characterized in that</u> said dessicant-containing enclosure (28 or 128) comprises: a box (300); a plurality of hollow tubes (341), e.g., perforated hollow tubes containing dessicant (34), e.g., a Zeolite, therein, said tubes being disposed between an inlet plenum (313) and an outflow plenum (382); air flow connections between said hollow tubes (341) and said plenums (313,382), e.g., by means of hollow collars (314) disposed within the core of the hollow tubes; means (316) for feeding air to said inlet header; and means (385) for withdrawing air from said outlet header.

3. The dessicant heat storage system of claims 1 or 2 <u>further characterized in that</u> said dessicant bed (28 or 128) is constructed and configured to absorb about 5 - 20% of its own weight of water by the passage of moist air therethrough.

4. The dessicant heat storage system of claims 1, 2 or 3 <u>further charaterized that</u> it includes means (32 or 132) associated with said condenser stage (31 or 131) for recovering the moisture removed from the moist air.

5. The dessicant heat storage system of claims 1, 2 or 3 further characterized in that it includes means (32 or 132) associated with said condenser stage (31 or 131) for recovering the moisture removed from the moist air, and further in that it includes means (49,47 or 149,147) for using recovered moisture in said air wetting means.

6. The dessicant heat storage system of claims 1, 2, 3, 4 or 5 further characterized in that it includes thermostat and associated control means (48 or 148) for shutting off said air wetting means (49, 47 or 149,147) just prior to the sensing of the value of the temperature reaching a predetermined value.

7. A method for dessicant heat storage comprising:

(A) storing heat by the steps comprising

    (a) drawing outside air and/or inside air into an internal air circulation system,

    (b) heating said outside air and/or passing heated inside air at a temperature of about 120–200°C. through a dessicant bed, thereby drying said dessicant bed, while storing heat in said dessicant bed and transferring moisture to said air,

    (c) withdrawing warm moist air at a temperature of up to about 200°C. from said dessicant bed,

    (d) passing said warm moist air through a condensation zone, whereby its moisture content is reduced, and

    (e) circulating said drier air within said internal air circulation system; and

(B) recovering said stored heat by the steps comprising:

    (f) drawing internal air into the air circulation system,

    (g) converting said air to moist air,

    (h) passing said moist air through said dried dessicant bed, thereby wetting said bed to a moisture content of about 5–20% by weight while releasing heat from the bed, to said air, and drying said air, and

    (i) circulating said warm dry air within said internal circulation system.

0085118

FIG. 1

0085118

FIG. 2

0085118

FIG. 3

FIG.4

European Patent Office

**EUROPEAN SEARCH REPORT**

Application number

EP 82 10 0602

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-2 010 468 (WALLSTEN) * page 4, lines 46-52; page 6, lines 51-62; figure 5 * | 1,2 | F 24 J 3/00 F 24 D 11/00 |
| A | US-A-4 054 126 (ERVIN) | | |
| A | US-A-4 138 861 (WURM) | | |
| A | US-A-4 287 721 (ROBISON) | | |
| A | US-A-4 014 380 (RUSH) | | |

TECHNICAL FIELDS SEARCHED (Int. Cl. 3)

F 24 J
F 24 D
F 24 F

The present search report has been drawn up for all claims

| Place of search | Date of completion of the search | Examiner |
|---|---|---|
| THE HAGUE | 10-09-1982 | PERROTTA A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82